# EUROPEAN PATENT APPLICATION

(11) **EP 3 113 525 A1**
(43) Date of publication of application: **04.01.2017**
(21) Application number: 15306095.9
(22) Date of filing: 03.07.2015
(51) Int. Cl.: H04W 8/18

(54) **METHOD, TOKEN AND SYSTEM FOR SWITCHING FROM A FIRST TO A SECOND MOBILE NETWORK OPERATOR**

(71) Applicant: GEMALTO SA, 92190 Meudon (FR)
(72) Inventor: CORRADINO, David, 13881 GEMENOS Cedex (FR)
(74) Representative: Scheer, Luc

(57) **Abstract**

The invention relates to a method 20 for switching from a first to a second mobile network operator.

According to the invention, a token 12 cooperates with a device 14. The token stores a set of at least two subscriptions. Each of the at least two subscriptions is associated with at least one mobile network operator. A first subscription is active at the token and the device. The first subscription is related to a first mobile network operator. The method comprises the following steps. The token detects 24 a current value relating to at least one predetermined time parameter. The token compares 26 the current value relating to the time parameter to at least one predetermined first reference value relating to the time parameter. If the current value relating to the time parameter is greater than or equal to the first reference value relating to the time parameter, then the token switches 210 to a second subscription relating to a second mobile network operator. And the token sends to the device at least one identifier 216 relating to the second subscription.

The invention also relates to corresponding token and system.

## Description

### Field of the invention:

The invention relates generally to a method for switching from a first to a second mobile network operator.

Moreover, the invention pertains to a token for switching from a first to a second mobile network operator.

Within the present description, a token (or termed a Secure Element (or SE)) is a smart object that includes a chip that protects physically access to stored data and is intended to communicate data with the outside world, like e.g. a mobile (tele)phone, as a token host device.

The present invention is notably applicable to a mobile (radio-communication) field wherein a token may be either embedded, such as an embedded Universal Integrated Circuit Card (or eUICC) within a mobile terminal, as a token host device, or removable from a mobile terminal, as a chip included within a smart card termed Subscriber Identity Module (or SIM) type card (or the like), as a token.

Lastly, the invention relates to a system for switching from a first to a second mobile network operator as well.

### State of the art:

At certain dates/times or time periods in the year, a mobile network may be overloaded or congested. In such an environment, the bandwidth is either no more existing or too narrow to allow some subscribers to the mobile network to use their subscriptions.

However, such a known solution forces the subscribers not to consume or to postpone a consumption of one or several services which they access with their subscriptions.

Thus, there is a need to access a service offered to a subscriber to a mobile network even if a particular time event occurs during which the mobile network may be hardly accessible.

### Summary of the invention:

The invention proposes a solution for satisfying the just hereinabove specified need by providing a method for switching from a first to a second mobile network operator.

According to the invention, a token cooperates with a device. The token stores a set of at least two subscriptions. Each of the at least two subscriptions is associated with at least one mobile network operator. A first subscription is active at the token and the device. The first subscription is related to a first mobile network operator. The method comprises the following steps. The token detects a current value relating to at least one predetermined time parameter. The token compares the current value relating to the time parameter to at least one predetermined first reference value relating to the time parameter. If the current value relating to the time parameter is greater than or equal to the first reference value relating to the time parameter, then the token switches to a second subscription relating to a second mobile network operator. And the token sends to the device at least one identifier relating to the second subscription.

The principle of the invention consists in that, when a token that uses a subscription discovers that a current value relating to one or several predetermined time parameters, like e.g. a date/time and/or a time zone, reaches or exceeds at least a predefined value, the token swaps (or switches) to another subscription and then transmits it to a device.

The device that interacts with the token is thus forced to use a preferred second subscription instead of a first subscription.

A device user has the capacity, according to a time aspect, to access, by using the second subscription, one or several services offered that may be hardly accessible or not accessible at all with the first subscription.

It is noteworthy that the second mobile operator may allow accessing an enhanced Quality of Service (or QoS), an enhanced data debit rate, as a technical criterion(criteria) and/or any other non-technical criterion(criteria), as a criterion(criteria) that is(are) used for building an ordered list of one or several preferred mobile operators.

The invention solution allows addressing a second mobile (network) operator that is registered, at the token side, as a preferred mobile (network) operator, by switching to a corresponding second subscription.

It is to be noted that the preferred mobile operator may be comprised within an ordered priority list of one or several preferred mobile operators which are each associated with a corresponding subscription.

The invention solution allows accessing, in a timely manner, a preferred mobile operator.

The invention solution allows switching to a second subscription associated with a corresponding preferred mobile operator and thus benefiting from an additional flexibility relating to a time aspect.

It is to be noted that the second subscription which will become active and used after a subscription switch is distinct from the first subscription which is active before the subscription switch.

The invention method allows switching either statically, i.e. when present in a home or foreign country during a boot of the token, or dynamically, i.e. when roaming, to a second subscription. The second subscription is accessible through a Mobile Network Operator (or MNO) or a Mobile Network Virtual Operator (or MVNO), as a second mobile operator that may have an agreement with a first mobile operator.

The invention method may be automatically implemented. Thus, a subscriber to a first mobile operator, as a user of the token that implements the invention method, is not involved to switch to a second subscription relating to a second mobile operator. The invention method is therefore convenient for the subscriber to the concerned first mobile operator.

According to an additional aspect, the invention is a token for switching from a first to a second mobile network operator.

According to the invention, the token is likely to cooperate with a device. The token comprises means for storing a set of at least two subscriptions. Each of the at least two subscriptions is associated with at least one mobile network operator. A first subscription is active at the token. The first subscription is related to a first mobile network operator, the token is configured to detect a current value relating to at least one predetermined time parameter, to compare the current value relating to the time parameter to at least one predetermined first reference value relating to the time parameter, to switch, if the current time parameter value is greater than or equal to the first reference value relating to the time parameter, to a second subscription relating to a second mobile network operator. And the token is configured to send at least one identifier relating to the second subscription.

The token may be fixed to or removable from a token host device.

The invention does not impose any constraint as to a kind of the token.

As a removable token, it may be a SIM type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled or connected to a host device, as a device.

According to still an additional aspect, the invention is a system for switching from a first to a second mobile network operator.

According to the invention, the system comprises a device and a token. The token cooperates with the device. The token comprises means for storing a set of at least two subscriptions. Each of the at least two subscriptions is associated with at least one mobile network operator. A first subscription is active at the token and the device. The first subscription is related to a first mobile network operator. The token is configured to detect a current value relating to at least one predetermined time parameter, to compare the current value relating to the time parameter to at least one predetermined first reference value relating to the time parameter, to switch, if the current value relating to the time parameter is greater than or equal to the first reference value relating to the time parameter, to a second subscription relating to a second mobile network operator. And the token is configured to send to the device at least one identifier relating to the second subscription.

### Brief description of the drawings:

Additional features and advantages of the invention will be more clearly understandable after reading a detailed description of one preferred embodiment of the invention, given as one indicative and non-limitative example, in conjunction with the following drawings:

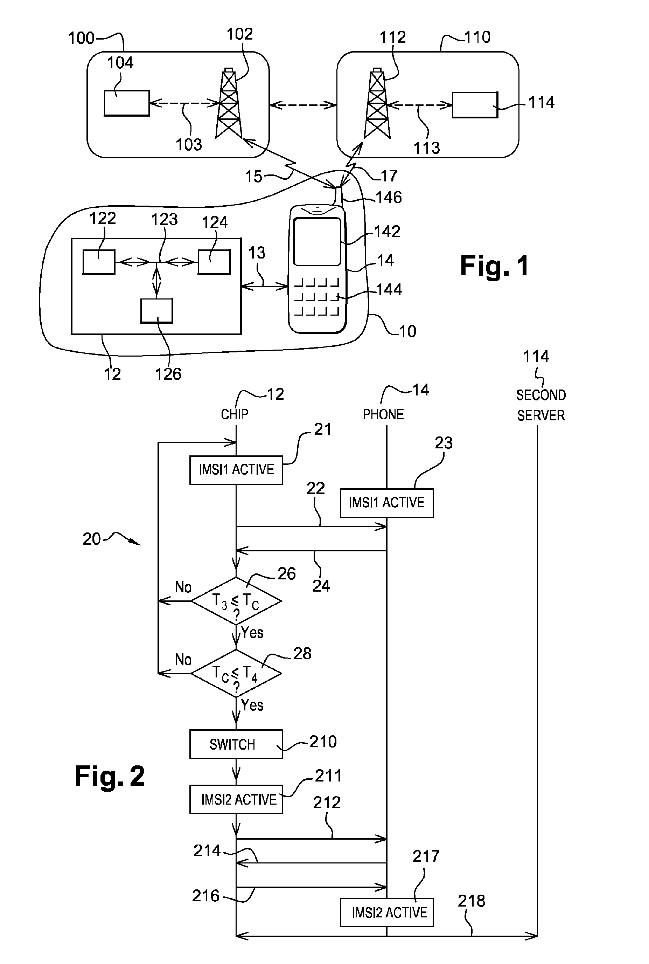

- Figure 1 is a simplified diagram of a first and a second mobile network and one exemplary embodiment of a terminal equipment, the terminal equipment being internally arranged to switch from a first subscription relating to a first mobile operator to a second subscription relating to a second mobile operator and associated with a time parameter reference value that is detected as being current or exceeded, according to the invention; and
- Figure 2 illustrates an example of a flow of messages exchanged between an authentication server relating to the second mobile network and the terminal equipment of figure 1, so that a token hosted by the terminal attached to the first mobile network forces the terminal, when a predetermined time parameter reference value occurs or is exceeded, to attach to the second mobile network by using the corresponding second subscription.

### Detailed description:

Herein under is considered a case in which the invention method for switching from a first to a second mobile (network) operator is implemented by a mobile phone, as a user terminal and a chip host device, and a chip carried by a card, as a chip medium and a token.

Alternately, instead of being carried by a card, the chip may be an embedded chip, like e.g. a eUICC, as a chip soldered, possibly in a removable manner, on a Printed Circuit Board (or PCB) of a terminal, a Trusted Execution Environment (or TEE), as a token and a secure area of a terminal processor and a secured runtime environment.

The token or SE may have different form factors.

Instead of being carried by a card, the chip may be carried by another medium, such as a dongle, like e.g. a USB type dongle.

According to another embodiment (not represented), the invention method for switching from a first to a second mobile operator is implemented by a device, as a standalone entity, at a client side. In other words, the device, like e.g. a mobile terminal, does not cooperate with any SE, so as to switch from a first to a second subscription based on a time aspect. According to such an embodiment (not represented), the device is adapted to carry out the functions that are described infra and that are carried out by the SE and its host terminal. Thus, a mobile phone may support an invention subscription switch application that is stored in a non-trusted environment.

Naturally, the herein below described embodiment is only for exemplifying purposes and is not considered to reduce the scope of the present invention.

**Figure 1** shows schematically a terminal equipment 10 that is firstly connected to a first mobile network 100 by using a first subscription and that is also, under radio coverage of a second mobile network 110 to be connected, by using a second subscription after a subscription switch based on a time aspect.

The terminal equipment 10, as a system for switching from a first to a second mobile operator, comprises a token with a chip 12 and a mobile phone 14, as a user terminal.

Instead of a phone, the user terminal or the terminal may be any other device including a (micro)processor(s), as means for processing data, comprising or being connected to wireless communication means for exchanging data with outside, and comprising or being connected to a memory(ies), as means for storing data.

Within the present description, the adjective "wireless" used within the expression "wireless communication means" denotes notably that the communication means communicates via one or several Long Range (or LR) Radio-Frequency (or RF) links.

The LR RF may be fixed at several hundreds of MHz around e.g. 850, 900, 1800, 1900 and/or 2100 MHz.

The user terminal (or a machine in a Machine to Machine (or M2M) context or a terminal) may be either fixed (i.e. not mobile) or mobile.

The (user) terminal may be a Personal Digital Assistant (or PDA), a vehicle, a set-top box, a tablet computer, a Personal Computer (or PC), a desktop computer, a laptop computer, a video player, an audio player, a portable TeleVision (or TV), a media-player, a game console, a netbook and/or any kind of electronic device that is able to exchange data by using different subscriptions and corresponding mobile network(s).

For clarity reason, the mobile phone 14, the first mobile network 100 and the second mobile network 110 are termed infra the phone 14, the first network 100 and the second network 110 respectively.

The phone 14 is preferably used for accessing two (or more) mobile networks, namely at least the first 100 and the second 110 network.

The phone 14 is connected, i.e. identified and preferably authenticated, to the first network 100.

The first 100 and second 110 networks, as cellular networks, may be constituted by a Global System for Mobile Communications (or GSM), a General Packet Radio Service (or GPRS), a Universal Mobile Telecommunications System (or UMTS), an EDGE (acronym for "Enhanced Data rates for GSM Evolution"), a Code Division Multiple Access (or CDMA) and/or a Long Term Evolution (or LTE) type network(s).

Such a cellular network set is not exhaustive but only for exemplifying purposes.

The first network 100 may be related to a home country and possibly one or several foreign countries.

The first network 100 includes a first base station 102 (or the like) that is used for communicating, over a first RF link 15, with an RF enabled device, like e.g. the phone 14.

The first network 100 is operated by at least one first mobile operator, like e.g. an MNO and/or an MVNO, as an MNO1.

The first network 100 covers, through the first base station 102, at least in part a geographical area in which the phone 14 is currently situated.

The first network 100 includes a first network authentication server, as a first (remote) server 104.

The first server 104 is operated by the first mobile operator MNO1.

The first server 104 is connected indirectly through internal network links 103 to the first base station 102.

The first network 100 may be connected, through a bi-directional wired link 19, to the second network 110.

The second network 110 may be the first network 100 or separate from the first network 100.

The second network 110 may be related at least in part to the home country or one or several foreign countries. Among the foreign countries, there are one or several foreign countries that may be commonly covered at least in part by the first 100 and second 110 networks.

The second network 110 includes a second base station 112 (or the like) that may be used for communicating, over a second RF link 17, with an RF enabled device, like e.g. the phone 14.

The second network 110 covers, through the second base station 112, at least in part a geographical area in which the phone 14 is currently situated.

The second network 110 is operated by at least one second mobile operator, like e.g. an MNO and/or an MVNO(s), as an MNO2, as a service provider or on its behalf.

The second mobile operator may be the first mobile operator or separate from the first mobile operator.

When there are two different mobile operators, they should have signed an agreement. The agreement allows a subscriber to the first mobile operator to access, according to a time aspect, after a subscription switch, the second network 110 relating to the second mobile operator MNO2 preferably in some predetermined locations, like e.g. one or several predefined identified cells of a territory. To access the second network 110, the chip 12 imposes to select a corresponding second subscription when present in a covered place where the phone 14 is currently located.

A subscriber to the first mobile operator MNO1 is thus able to communicate data by using, instead of a first subscription, a (preferred) second subscription that allows, according to a time aspect, accessing the second network 110 relating to the second mobile operator MNO2. The agreement may be mutual. The agreement also allows, according to a time aspect, a subscriber to the second mobile operator MNO2 to benefit, by using, instead of a second subscription, a (preferred) first subscription, from an access to the first network 100 relating to the first mobile operator MNO1.

The second network 110 includes a second network authentication server, as a second (remote) server 114.

The second server 114 is connected indirectly through internal network links 113 to the second base station 112.

The second server 114 is identified by a URI, like an URL, an IP address and/or the like, as a server identifier(s).

The server identifier may be stored within the chip memory 124 (or a phone memory).

The second server 114 is hosted by a computer.

The second server 114 is dedicated to running an application for managing a database and communicating data of the database to outside.

The second server 114 includes preferably a memory (not represented) that stores the database.

Instead of an internal memory, the second server 114 is connected to an external memory (not represented) storing the database.

The database includes a set of one (or several) identifier(s) relating, each, to a second subscription and a corresponding network authentication key Ki.

The second server 114 is used for authenticating notably the second subscription IMSI2.

Alternately, another server (not represented) that is connected to the second server 114 manages the database.

The phone 14 includes preferably a display screen 142 and a keyboard 144, as a phone Man Machine Interface (or MMI).

Alternatively, instead of a physical keyboard separated from the display screen, the phone 14 is equipped with a touch sensitive display screen, as virtual keyboard.

The phone MMI allows a phone user to interact with the phone 14.

The phone 14, as an RF enabled device, comprises an antenna 146. The antenna 146 allows communicating data, in a consecutive manner, through two LR RF links 15 and 17, with two (or more) mobile networks 100 and 110 respectively.

The phone 14 includes one or several (micro)processors (not represented), as data processing means, one or several memories, as data storing means (not represented), and one or several Input/Output (or I/O) interfaces (not represented) that are linked all together through a control and data bus (not represented).

The phone 14 plays, in a preferential manner, a role of a modulator-demodulator (or modem), so as to exchange data over one or several LR RF links.

The phone 14 carries out the following operations:
- a modulation of an analogical carrier signal to encode digital information to be transmitted, over the antenna 146, to the first 104 and second 114 servers, and
- a demodulation of a received analogical carrier signal to decode encoded digital information that is received, over the antenna 146, from the first 104 and second 114 servers.

The phone memory(ies) may comprise one or several volatile memories and/or one or several non-volatile memories.

The phone memory(ies) may include, as a volatile memory, at least one cache memory.

A phone memory, be it either a volatile or non volatile memory, stores, at least in a temporary manner, data relating to one subscription, namely, before a subscription switch, the first subscription and, after the subscription switch as further explained, the second subscription, which the phone 14 has to receive from the chip 12.

Thus, before a subscription switch, only the first subscription is active at the phone 14, and, once the subscription switch is performed at the chip 12, the phone 14 receives the second subscription to replace the first subscription and to be activated.

The phone memory(ies) store(s) an Operating System (or OS) and one or several applications.

The phone 14, as a chip host device, is coupled or connected to the chip 12.

Alternately, the phone 14 comprises the chip 12 that is soldered, i.e. fixed, possibly in a removable manner, to the PCB of the phone 14.

The phone I/O interfaces include one or several I/O interfaces for exchanging data with the chip 12, as a token chip removable from the phone 14.

The phone I/O interface(s) with the chip 12 may be an International Organization for Standardization (or ISO) 7816 and/or USB type interface(s), as a contact interface(s), when the chip 12 is inserted, in a removable manner, in the phone 14.

Alternately, instead of a contact interface(s), the phone I/O interface with the chip 12 is connected to or includes a contact-less interface. The phone 14 is connected to or includes means for communicating data while using preferably a Short Range (or SR) RF link. The SR RF link may be related to any technology that allows the phone 14 to exchange data, through a so-termed contact-less link with the chip 12. The SR RF may be fixed at 13,56 MHz and related to a Near Field Communication (or NFC) type technology, as a contact-less technology.

The chip 12 is under a control of the phone 14.

The chip 12 cooperates with the phone 14, so as to be able to exchange data through, firstly, the first network 100 and, secondly, the second network 110 after a subscription switch based on a time aspect.

The chip 12 is preferably associated with or tied to the first server 104.

The chip 12 belongs to a user, as a subscriber to the first operator MNO 1, so as to benefit from one or several wireless services.

The chip 12 is connected, through a bi-directional link 13, to the phone 14.

The chip 12 includes a (micro)processor(s) 122, as data processing means, a memory(ies) 124, as data storing means, and one or several I/O interfaces 126 that are internally all connected, through an internal bidirectional data bus 123, to each other.

The I/O interface(s) 126 allow(s) communicating data from the internal chip 12 components to the chip exterior and conversely.

The processor 122 processes, controls and communicates internally data with all the other components incorporated within the chip 12 and, through the I/O interface(s) 126, with the chip exterior.

The processor 122 executes or runs one or several applications.

The processor 122 performs, in a preferred manner, one or several security functions.

The security functions include preferably a user authentication process to be used prior to continuing to access the memory 124, notably at a boot and/or a re-boot of the chip 12. To authenticate the user, the user has to provide a Personal Identification Number (or PIN) or biometric data, as user reference data to be matched, that is stored, preferably in a secure manner, in the memory 124. As biometric data, it may include one or several fingerprints, one or several iris prints and/or one or several voiceprints relating to one or several authorized users.

The processor 122 is preferably able to initiate actions, in order to interact directly with the outside world, in an independent manner of the phone 14, as a chip host device. Such a capacity of interaction at the initiative of the chip 12 is also known as being a proactive capacity. According to one preferred embodiment, the chip 12 is able to use SIM ToolKit (or STK) type commands, as proactive commands.

The memory 124 stores an OS.

The memory 124 stores preferably one or several Subscriber Identity Module (or SIM) type applications.

The SIM type application(s) allow(s) the phone 14 to identify and authenticate to the first 100 and second 110 networks and, more exactly, the first 104 and the second 114 server.

Among the supported applications, the memory 124 stores an invention application termed subscription manager that the microprocessor 122 executes.

The memory 124 stores preferably data relating to a Uniform Resource Identifier(s) (or URI), a Uniform Resource Locator(s) (or URL) and/or an Internet Protocol (or IP) address(es) of one or several external entities to be addressed, like e.g. the first 104 and the second 114 server.

The memory 124 stores preferably a plurality of sets of data relating, each, to a subscription, such as a subscription to one or several wireless services. Among the subscription data set plurality, there are a first subscription data set relating to the first network 100 and at least one second subscription data set relating to the second network 110.

Each subscription data set may include:
- an International Mobile Subscriber Identity (or IMSI), as an identifier that allows identifying a subscriber for accessing a mobile network;
- a key Ki, as a network authentication key, allowing to authenticate the subscriber to the mobile network and more exactly to a network authentication server;
- Milenage, as a network authentication algorithm, allowing to authenticate the subscriber to the network authentication server;
- a file system including one or several Elementary Files (or EF);
- one or several security keys, like e.g. a key(s) for encrypting/decrypting data and/or a key(s) for signing data a key(s), as secret data; and/or
- one or several credentials, like e.g. a user name and/or an IDentifier (or ID) of the subscriber, as data relating to the user.

The memory 124 stores, preferably within a first security domain (not represented), as a first memory area, the first subscription data set.

Each subscription data set is identified by an identifier. The first subscription data set IMSI1 relates to the first mobile operator MNO1. The first mobile operator MNO1 is a first home or foreign country operator.

The first subscription data set IMSI1 allows identifying, as subscriber, to the first server 104.

The first subscription data set IMSI1 comprises a first key K1 that allows authenticating to the first server 104.

The first subscription data set IMSI1 is active, i.e. is in an enabled state, before a subscription switch and is inactive after the subscription switch at the chip 12 side.

The memory 124 also stores, preferably within at least one second security domain (not represented), as at least one second memory area, each other subscription data set, namely the second subscription data set within the second memory area and so on respectively.

The second memory area is separate from the first memory area.

The second subscription data set IMSI2 relates to the second mobile operator MNO2. The second mobile operator MNO2 is a second home or foreign country operator.

The second subscription data set IMSI2 allows identifying, as subscriber, to the second server 114.

The second subscription data set IMSI2 comprises a second key K2 that allows authenticating to the second server 114.

The second subscription data set IMSI2 is inactive, i.e. in a disabled state, before a subscription switch.

The second subscription data set IMSI2 will be active after the subscription switch at, firstly, the chip 12 and then the phone 14.

Alternately, instead of addressing the second server 114, as an authenticator of the subscriber, the second network 110 may re-direct a corresponding received network authentication request to the first server 104. According to such an embodiment, the subscription data sets IMSI1 and IMSI2 include different IMSIs but share one and the same network authentication key, namely the first Ki1.

According to an essential feature of the invention, the chip 12 is arranged to switch from a first to a second subscription, according to a time aspect, like e.g. when a current value relating to one or several predefined time parameters reaches or exceeds, each, a predetermined value.

The subscription manager allows carrying out a subscription switch at the chip 12 side, so as to use data relating to the second subscription to be activated, as a subscription associated with a time parameter(s), like e.g. a predetermined time parameter value and/or a predetermined time parameter range value. The subscription manager allows ensuring to switch from a connection to the first network 100 to a connection to the second network 110 without involving preferably the terminal user, except for a possible user authentication.

Alternately, the chip 12 is arranged to switch from a first to a second subscription, according to a time aspect, like e.g. when a current value relating to one or several predefined time parameters reaches or is below, each, a predetermined value.

Such a subscription switch allows de-activating the first subscription, as a currently active subscription, and then activating a second subscription, as a currently non-active subscription to be activated.

The memory 124 stores data relating to a correspondence table.

The correspondence table is previously provisioned to the chip 12, either during its manufacturing or, after its issuance, from a remote server or a local terminal, such as a PC.

The correspondence table includes, preferably for a predetermined country A and possibly one or several predefined cells, one or several preferred subscription data sets that may be used instead of the first subscription data set IMSI1 depending on a time aspect.

The country A may be a home or a foreign country, as the country where the phone 14 has to be present for a subscription switch depending on a time aspect.

One or several predefined cells may be additionally used for locating or situating more precisely the phone 14 where this latter has to be present, as a further condition that may have to be satisfied, so as to switch from a first to a second subscription.

The correspondence table may list, in a priority order, preferred subscription data sets, among which one subscription data set is to be selected and used after a subscription switch.

The priority order may be determined in accordance with an enhanced QoS, an enhanced data debit rate, as a technical criterion(criteria) and/or any other non-technical criterion(criteria), as a criterion(criteria) that is(are) used for building the ordered list of one or several preferred subscription data sets.

The subscription switch occurs based on a time aspect, it may be e.g. when a predetermined value relating to a predefined time parameter, such as e.g. a date/time or a time zone, is (currently) reached or exceeded.

For instance, the correspondence table is as follows:

| Country | Current Date/Time is comprised within a predefined time period | Subscription (data set) to be activated |
|---|---|---|
| A | D1/T1-D2/T2 | IMSI1 |
| A | D2/T3-D2/T4 | IMSI2 |

For one and the same place, like e.g. a predefined country A and possibly one or several predefined cells (not represented), one corresponding subscription data set is present within such a preferred subscription data set list for each time period. Instead of only one subscription data set, several subscription data sets that are ordered, in a descending order, with respect to their relative priority within a preferred subscription data set list is present for at least one of the different time periods. Thus, if, further to a first switch to the subscription data set of the highest level within the ordered list of subscription data sets, an issue (like e.g. a connection to a corresponding mobile network has failed) occurs, then a second switch (and possibly a further switch(es)) to the subscription data set that follows in the priority order in the ordered list is performed.

The correspondence table contains, in this example, only two subscription data sets namely:
- a first subscription data set IMS11, as the highest priority level. The first subscription data set IMSI1 is associated with a first predefined reference time window or period D1/T1-D2/T2, like e.g. a non-working time range, in which D1 represents e.g. a first predefined day, like e.g. a Sunday, T1 represents a first predefined time value, as a lowest time limit, like e.g. a first precise hour, like e.g. 5.00 p.m., D2 represents e.g. a second predefined day that follows the first predefined day D1, like e.g. Monday, and T2 represents a second predefined time value, as a upper time limit, like e.g. a second precise hour, like e.g. 8.00 a.m.; and
- a second subscription data set IMSI2, as the highest priority level. The second subscription data set IMSI2 is associated with a second predefined reference time window or period D2/T3-D2/T4, like e.g. a working time range, in which D2 represents e.g. a predefined following day, T3 represents a third predefined time value, like e.g.8.01 a.m. and T4 represents a fourth predefined time value, like e.g. 4.59 p.m.

The invention is still applicable with more than two predefined time periods with one or more preferred subscription data sets, in an ordered manner, for each predefined time period.

Several subscription data sets relating to two (or more) mobile operators and corresponding two (or more) mobile networks 100 and 110 are thus alternately available, for a given location and a time slicing into different time periods, at the client side, within the chip 12.

In the given example, the second subscription data set IMSI2 relates to the second mobile operator MNO2 that is distinct from the first mobile operator MNO1.

To perform a subscription switch operation, based on a time aspect, the chip 12 is adapted to detect a current value relating to one or several predetermined time parameters, like e.g. a date/time and/or a time zone.

The chip 12 is preferably able to send, on its (own) initiative, through or to the phone 14, a proactive command, like e.g. a "PROVIDE LOCI" command, as a command for getting local information relating to a location where the phone 14 is currently present.

The PROVIDE LOCI proactive command, once configured as explained infra, allows getting or detecting a current value relating to a predetermined time parameter(s), like e.g. a date/time and/or a time zone.

For instance, the "PROVIDE LOCI" command is configured as follows, in the following Tag Length Value (or TLV) data format, according to the ETSI TS 102.223:

| **Description** | **Clause** | **M/O/C** | **Min** | **Length** |
|---|---|---|---|---|
| Proactive UICC command Tag | 9.2 | M | Y | 1 |
| Length (A+B) | - | M | Y | 1 or 2 |
| Command details | 8.6 | M | Y | A |
| Device Identities | 8.7 | M | Y | B |

The "Command details" data field includes the following data fields:

| **Byte(s)** | **Description** | **Length** |
|---|---|---|
| 1 | Command details tag | 1 |
| 2 | Length = '03' | 1 |
| 3 | Command number | 1 |
| 4 | Type of command | 1 |
| 5 | Command Qualifier | 1 |

The "Command Qualifier" data field has to be set to '03', so as to retrieve a current " Date, time and time zone".

The chip 12 is arranged to receive, as a response to the sent "PROVIDE LOCI" command, from the phone 14, a so-termed terminal response, in the following TLV data format, according to the ETSI TS 102.223:

| **Byte(s)** | **Description** | **Length** |
|---|---|---|
| 1 | Date-Time and Time zone tag | 1 |
| 2 | Length = '07' | 1 |
| 3 to 9 | Date-Time and Time zone | 7 |

The value of the "Date-Time and Time Zone" data field includes, as Date, Time and Time Zone, a coding that follows:
- byte 3: Year; this byte is coded exactly in the same way as the Year field of the TP-Service-Centre-Time-Stamp in TS 123 040 [27];
- byte 4: Month; this byte is coded exactly in the same way as the Month field of the TP-Service-Centre-Time-Stamp in TS 123 040 [27];
- byte 5: Day; this byte is coded exactly in the same way as the Day field of the TP-Service-Centre-Time-Stamp in TS 123 040 [27];
- byte 6: Hour; this byte is coded exactly in the same way as the Hour field of the TP-Service-Centre-Time-Stamp in TS 123 040 [27];
- byte 7: Minute; this byte is coded exactly in the same way as the Minute field of the TP-Service-Centre-Time-Stamp in TS 123 040 [27];
- byte 8: Second; this byte is coded exactly in the same way as the Second field of the TP-Service-Centre-Time-Stamp in TS 123 040 [27];
- byte 9: Time Zone; this byte is coded exactly in the same way as the Time Zone field of the TP-Service-Centre-Time-Stamp in TS 123 040 [27]. 'FF' indicates an unknown value.

The chip 12 is adapted to interpret the received data, so as to retrieve the current value relating to the predetermined time parameter(s), such as "Date, time and time zone". Thus, the chip 12 is arranged to recognize the data field relating to the date/time, (and/or the data field relating to the time zone) and to identify the current value relating to the date/time (and/or the time zone).

The chip 12 is adapted to compare the current value relating to each predetermined time parameter to one or several reference values relating to the predetermined time parameter.

Depending on a comparison result, the chip 12 is adapted to switch to the second subscription IMSI2 (i.e. if the required condition(s), like e.g. a current value relating to a time parameter(s) is equal to or greater than a first predetermined reference value is to be satisfied) is(are) satisfied, or to keep the first subscription IMSI1 active (i.e. if the required condition(s) is(are) not satisfied).

To switch to the second subscription IMSI2, the chip 12 is adapted to de-activate the first subscription IMSI1 and to activate the concerned second subscription IMSI2.

Once switched, the chip 12 is able to send to the phone 14 one (or several) identifier(s) relating to the concerned second subscription IMSI2, so as to de-activate the first subscription IMSI1 and to activate the concerned second subscription IMSI2 at the phone 14 side.

**Figure 2** depicts an exemplary embodiment of a message flow 20 that involves the (token) chip 12, the phone 14 and the second server 114.

In the explained example, it is assumed that the phone 14 is located in a predefined country A, like e.g. France, under a radio coverage of the first 100 and the second 110 network.

It is also assumed that the chip 12 has authenticated to the first server 104 by using the first subscription identifier IMSI1 and the associated network authentication key Ki1 of the first subscription data set.

It is also assumed that the chip 12 uses the correspondence table that is stated supra in the description relating to the Figure 1.

Initially, the first subscription IMSI1 is 21 active, before a subscription switch, at the chip 12.

Initially, the first subscription IMSI1 is also 23 active, before a subscription switch, at the phone 14.

To detect a current value relating to a predetermined time parameter(s), the chip 12 may poll regularly, e.g. every 30 s, the phone 14 by sending a "PROVIDE LOCI" type proactive command configured as explained supra.

The chip 12 sends preferably to the phone 14 a PROVIDE LOCI type proactive command 22, as a STK type command, so as to request a current value relating to a Date/time (and possibly time zone), as a time parameter, as local information relating to a location where the phone 14 is currently situated.

Once the phone 14 has retrieved the current value relating to the concerned time parameter, the phone 14 sends to the chip 12 a message 24, as request response, that includes the concerned current value relating to the Date/time, like e.g. 8.21 a.m..

Once the chip 12 has detected the current value relating to the Date/time, the chip 12 compares 26 the current value relating to the Date/time to a predetermined first reference value relating to the Date/time, like e.g.D2/T3.

If the current value relating to the Date/time is equal to or greater than the predetermined first reference value relating to the Date/time, like e.g.D2/T3, as a first condition to be satisfied to switch to a second subscription, then the chip 12 continues analysing whether other possible condition(s) is(are) or is(are) not satisfied.

For instance, the chip 12 compares 28 the current value relating to the Date/time to a predetermined second reference value relating to the Date/time, like e.g.D2/T4.

While the first condition to be satisfied is not satisfied, the chip 12 continues to poll the phone 14, so as to analyse whether each detected current value relating to the date/time does or does not satisfy the first condition.

If the current value relating to the Date/time is less than the predetermined second reference value relating to the Date/time, like e.g.D2/T4, as a second condition to be satisfied to switch to a second subscription, then the chip 12 switches 210 from the first IMSI1 to the second IMSI2 subscription that is associated with the time window D2/T3-D2/T4 within the correspondence table.

The current value relating to the date/time is included within a time period or range that is associated with e.g. a working time (instead of e.g. a non-working time) and with a corresponding second subscription IMSI2 (instead of e.g. the first subscription IMSI1).

While the second condition to be satisfied is not satisfied, the chip 12 continues to poll the phone 14, so as to analyse whether each detected current value relating to the date/time does or does not satisfy the first condition.

The chip 12 de-actives the first subscription data set IMSI1 and activates the second subscription data set IMSI2, so as to switch to the second subscription IMSI2.

The second subscription IMSI2 is 211 active at the token side.

Once the second subscription data set IMSI2 is activated, the chip 12 sends to the phone 14 a REFRESH-INIT type proactive command 212, as a request for reading an EF-IMSI2, as a file relating to the concerned second subscription IMSI2.

Such a file reading request allows synchronizing the phone 14 with the chip 12 with respect to the subscription data set that is currently active, namely the second subscription data set IMSI2 instead of the previously first subscription data set IMSI1.

Alternatively, instead of a file reading request, the chip 12 sends to the phone 14 a REFRESH-RESET type proactive command, as a request for re-initializing or re-booting the phone 14.

Such a proactive command 212 allows reading all the files stored within the chip memory 124, and thus carrying out an internal subscription switch.

Optionally, the chip 12 requests a phone user to authenticate, so as to continue an attachment to the second network 110.

After a successful user authentication, when requested, the phone 14 sends to the chip 12 a request 214 for getting data relating to a currently active subscription.

The chip 12 sends to the phone 14 a message 216, as a request response, including the data relating to the second subscription IMSI2, as the currently active subscription at the token side.

Alternately, without any chip user authentication request, the chip 12 sends to the phone 14 a message 216, as a request response, including the data relating to the second subscription IMSI2, as the currently active subscription at the token side.

Once the data relating to the second subscription IMSI2 is received, the phone 14 updates its memory (like a cache memory), at least in a temporary manner, while copying or duplicating the data relating to the second subscription IMSI2.

The phone 14 stores data relating to the second subscription IMSI2 that constitutes a copy of the data relating to the second subscription IMSI 2 which the chip 12 has just switched onto.

The second subscription IMSI2 is 217 active at the phone side.

Then, the chip 12 is able to identify and authenticate, based on the concerned stored data relating to the second subscription IMSI2, to the second network 110.

The chip 12 authenticates successfully, through the phone 14, to the second network 110 by using a network authentication key Ki2 (or Ki1) relating to the second subscription IMSI2, as a currently active subscription. To authenticate to the second network 110, the chip 12 exchanges with the second server 114 data 218. The exchanged data 218 may comprise e.g. a random originating through or from the second server 114, as a challenge, a corresponding challenge response and a network authentication success or failure.

The chip 12 is able to receive, as request response, from the second server 114 a message 218 relating to a result of a network authentication, namely either a success or a failure relating to a network authentication.

The invention solution allows changing, after a subscription switch at the chip 12 and the phone 14, the active subscription depending on, besides the country, a time aspect.

The invention solution thus adds a time condition to the available subscription switch technology, so as to switch from a first to a second subscription.

The invention solution does not need to involve a phone user, except for possibly submitting user authentication data, when applicable.

The invention solution is therefore transparent to the user, apart from a possible user authentication operation.

The invention solution is compatible with the existing mobile network infrastructure.

The invention solution is preferably secure by authenticating the terminal equipment to the second network and possibly a terminal user.

## Claims

1. A method (20) for switching from a first to a second mobile network operator,
**characterized in that**, a token (12) cooperating with a device (14), the token storing a set of at least two subscriptions, each of the at least two subscriptions being associated with at least one mobile network operator, a first subscription being active at the token and the device, the first subscription being related to a first mobile network operator, the method comprises the following steps:
- the token detects (24) a current value relating to at least one predetermined time parameter;
- the token compares (26) the current value relating to the time parameter to at least one predetermined first reference value relating to the time parameter;
- if the current value relating to the time parameter is greater than or equal to the first reference value relating to the time parameter, then the token switches (210) to a second subscription relating to a second mobile network operator; and
- the token sends to the device at least one identifier (216) relating to the second subscription.

2. Method according to claim 1, wherein, the current value relating to the time parameter being greater than or equal to the first reference value relating to the time parameter,
- the token further compares (28) the current value relating to the time parameter to at least one predetermined second reference value relating to the time parameter;
- if the current value relating to the time parameter is less than or equal to the second reference value relating to the time parameter, then the token switches to a second subscription relating to a corresponding second mobile network operator.

3. Method according to claim 1 or 2, wherein, to switch to the second subscription, the token uses, besides the identifier relating to the second subscription, additional data relating to the second subscription, the additional data comprising at least one element of a group comprising:
- at least one key for accessing the second mobile network;
- at least one second mobile network authentication algorithm;
- at least one secret.

4. Method according to any of claim 1 to 3, wherein, prior to detecting the current value relating to the time parameter, the token sends to the device a request (22) for getting local information relating to a location where the subscriber is currently situated.

5. Method according to claim 4, wherein, to detect the current value relating to the time parameter, the method further comprises the following steps:
- the device sends to the token local information, the local information including a data field relating to a date/time;
- the token recognizes the data field relating to the date/time and identifies the current value relating to the date/time.

6. Method according to claim 4, wherein, to detect the current value relating to the time parameter, the method further comprises the following steps:
- the device sends to the token local information, the local information including a data field relating to a time zone;
- the token recognizes the data field relating to the time zone and identifies the current value relating to the time zone.

7. Method according to any of claims 1 to 6, wherein the token sends to the device a request (212) for reading a file relating to the second mobile network.

8. Method according to any of claims 1 to 7, wherein the token sends to the device a request for re-initializing the device.

9. A token (12) for switching from a first to a second mobile network operator,
**characterized in that**, the token being likely to cooperate with a device (14), the token comprising means for storing a set of at least two subscriptions, each of the at least two subscriptions being associated with at least one mobile network operator, a first subscription being active at the token, the first subscription being related to a first mobile network operator, the token is configured to:
- detect a current value relating to at least one predetermined time parameter;
- compare the current value relating to the time parameter to at least one predetermined first reference value relating to the time parameter;
- switch, if the current time parameter value is greater than or equal to the first reference value relating to the time parameter, to a second subscription relating to a second mobile network operator; and
- send at least one identifier relating to the second subscription.

10. A system (10) for switching from a first to a second mobile network operator,
**characterized in that**, the system comprising a device (12) and a token (14), the token cooperating with the device, the token comprising means for storing a set of at least two subscriptions, each of the at least two subscriptions being associated with at least one mobile network operator, a first subscription being active at the token and the device, the first subscription being related to a first mobile network operator, the token is configured to:
- detect a current value relating to at least one predetermined time parameter;
- compare the current value relating to the time parameter to at least one predetermined first reference value relating to the time parameter;
- switch, if the current value relating to the time parameter is greater than or equal to the first reference value relating to the time parameter, to a second subscription relating to a second mobile network operator; and
- send to the device at least one identifier relating to the second subscription.
